# EUROPEAN PATENT SPECIFICATION

(11) **EP 3 574 648 B1**
(45) Date of publication and mention of the grant of the patent: **13.12.2023**
(21) Application number: 18704685.9
(22) Date of filing: 25.01.2018
(51) Int. Cl.: H04N 7/18, G06T 7/20, B63C 9/00, G08B 21/08

(54) **LINE ARRAY CAMERAS FOR A MAN OVER BOARD DETECTION SYSTEM**
LINE-ARRAY-KAMERAS FÜR EIN MANN-ÜBER-BORD-DETEKTIONSSYSTEM
CAMÉRAS AVEC MATRICE LIGNE POUR LA DÉTECTION D'UN HOMME À LA MER

(30) Priority: 25.01.2017 US 201762450443 P
(43) Date of publication of application: 04.12.2019
(73) Proprietor: Carrier Corporation, Jupiter, FL 33478 (US)
(72) Inventor: HARRIS, Peter R., East Hartford, Connecticut 06108 (US); ALEXANDER, Jennifer M., East Hartford, Connecticut 06108 (US)
(74) Representative: Dehns
(86) International application number: PCT/US2018/015139
(87) International publication number: WO 2018/140549

(56) References cited:
- CN-A- 104 268 882
- GB-A- 2 493 390
- JP-A- H05 189 638
- US-A1- 2012 229 282
- US-B1- 9 106 810

## Description

### BACKGROUND

The subject matter disclosed herein relates generally to the field of object detection, and specifically to a method and apparatus for man overboard detection.

Commonly, man overboard detection systems rely on eye-witness accounts or use thermal imaging cameras to detect a body in the water once someone has fallen overboard. However, a person's body temperature must be significantly different from that of the water to be visible on the thermal imaging camera and even small waves can obscure the camera's view of a person in the water. A more reliable solution for man overboard detection is desired. CN104268882 discloses an object detection using dual line-array cameras. Velocity and trajectory of the object are determined from the captured line data. US2012229282 discloses a system to detect "man overboard" events using scanners placed all around the ship. Recognition of whether a detected object is a human body is performed using velocity of the falling object determined from the scanner data. Video images from dedicated cameras are captured when a falling body is detected. Actions are taken in response to the detection. GB2493390 discloses detection that a falling object is a human body by determining the speed of the falling object using ranging sensor data. If a body is detected, video data captured by separate camera is acquired and an alert message is sent. US9106810 discloses a man-overboard detection system using video data from cameras positioned all around the ship. JPH05189638 discloses a human detection system using a line array camera obliquely oriented with respect to the ground. A 2D image is constructed from the line array data and analysed to determine the nature of the object crossing the field of view of the camera.

### BRIEF SUMMARY

According to a first aspect, the present invention provides a man-overboard detection system, the system comprising: a first line array camera, and a second line array camera located at a first selected distance below the first line array camera, the first and second line array cameras being configured to capture one or more data sets within a field of view of the line array camera using a one-dimensional array of pixels within each line array camera, each data set being a one-dimensional output from the one-dimensional array of pixels at a point in time; and a control system configured to determine when an object has moved through a field of view based on the one or more data sets and determine whether the object is a person based on the one or more data sets; wherein the control system is configured to: determine that a person has moved through a field of view based on at least one of variations within each data set and variations between each data set; determine the velocity of the object based on one or more data sets captured by the first line array camera, the one or more data sets captured by the second line array camera, and the first selected distance; compile a two-dimensional image based on the velocity of the object and at least one of the one or more data sets captured by the first line array camera and the one or more data sets captured by the second line array camera; and analyze the two-dimensional image to determine whether the object is a person or not.

The control system may be configured to activate a response protocol when a person is detected.

The response protocol may include at least one of an alarm, a notification message to crew, a buoy drop, an engine stop or a coast guard call.

The system may further comprise a third line array camera located at a second selected distance away from the first line array camera, the third line array camera facing the first line array camera in such a way that a field of view of the third camera overlaps the field of view of the first camera; wherein the control system is configured to determine at least one of a size and a location of the object based on the second selected distance and at least one of the one more or more data sets captured by the first line array camera, and the one or more data sets captured by the third line array camera.

The control system may be configured to determine that the object is not a human being based on the size of the object.

At least one of the time and location of the object may be transmitted for human verification of the object.

The first line array camera may be a short wave infrared camera.

The first line array camera may utilize active illumination.

According to another aspect, the present invention provides a method of man-overboard detection, the method comprising: capturing one or more data sets within a field of view of a first line array camera; and a second line array camera located at a first selected distance below the first line array camera; using a one-dimensional array of pixels within each line array camera, each data set being a one-dimensional output from the one-dimensional array of pixels at a point in time; determining, using a control system, when an object has moved through a field of view based on the one or more data sets; and determining whether the object is a person based on the one or more data sets; wherein the control system is configured to: determine that a person has moved through a field of view based on at least one of variations within each data set and variations between each data set; and determine the velocity of the object based on one more or more data sets captured by the first line array camera, the one or more data sets captured by the second line array camera, and the first selected distance; compiling, using the control system, a two-dimensional image based on the velocity of the object and at least one of the one more or more data sets captured by the first line array camera and the one or more data sets captured by the second line array camera; and analyzing, using the control system, the two-dimensional image to determine whether the object is a person or not.

The method may include activating, using the control system, a response protocol when a person is detected.

Technical effects of embodiments of the present disclosure include detecting an object falling overboard a ship using at least one line array camera.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The foregoing and other features, and advantages of the disclosure are apparent from the following detailed description taken in conjunction with the accompanying drawings in which like elements are numbered alike in the several FIGURES:
FIG. 1a-1e illustrates a schematic view of a line array camera capturing multiple one dimensional data sets of an object to compile a two-dimensional image, in accordance with an embodiment of the disclosure;
FIG. 2 illustrates a schematic view of an object overboard detection system of for use on a ship, in accordance with an embodiment of the disclosure;
FIG. 3 illustrates a side view of a ship incorporating the object overboard detection system of FIG. 1, in accordance with an embodiment of the disclosure;
FIG. 4 illustrates a top view of a ship incorporating the object overboard detection system of FIG. 1, in accordance with an embodiment of the disclosure;
FIG. 5 is a flow chart of a method of operating an object overboard detection system, in accordance with an embodiment of the disclosure; and
FIG. 6 is a flow chart of a method of response protocol after detecting an object falling overboard, in accordance with an embodiment of the disclosure.

### DETAILED DESCRIPTION

A detailed description of one or more embodiments of the disclosed apparatus and method are presented herein by way of exemplification and not limitation with reference to the Figures.

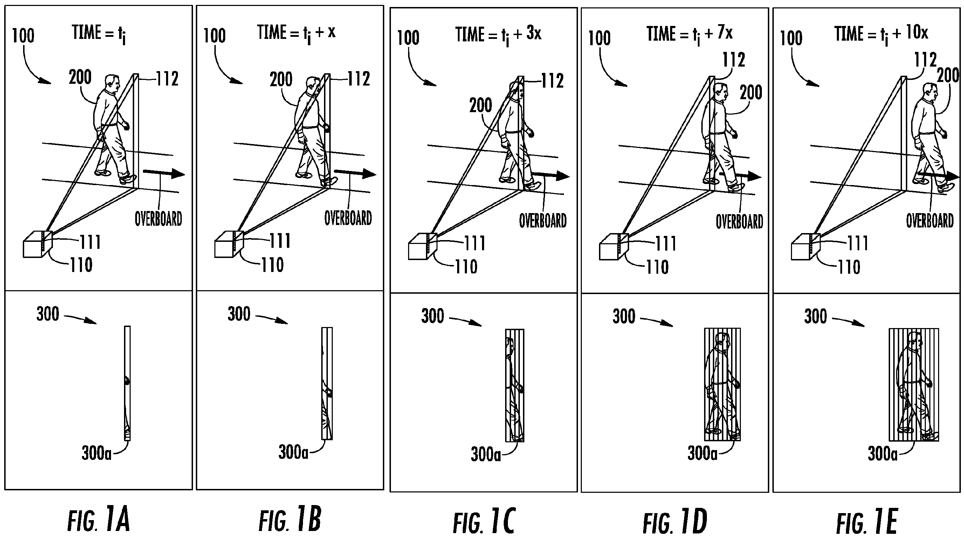

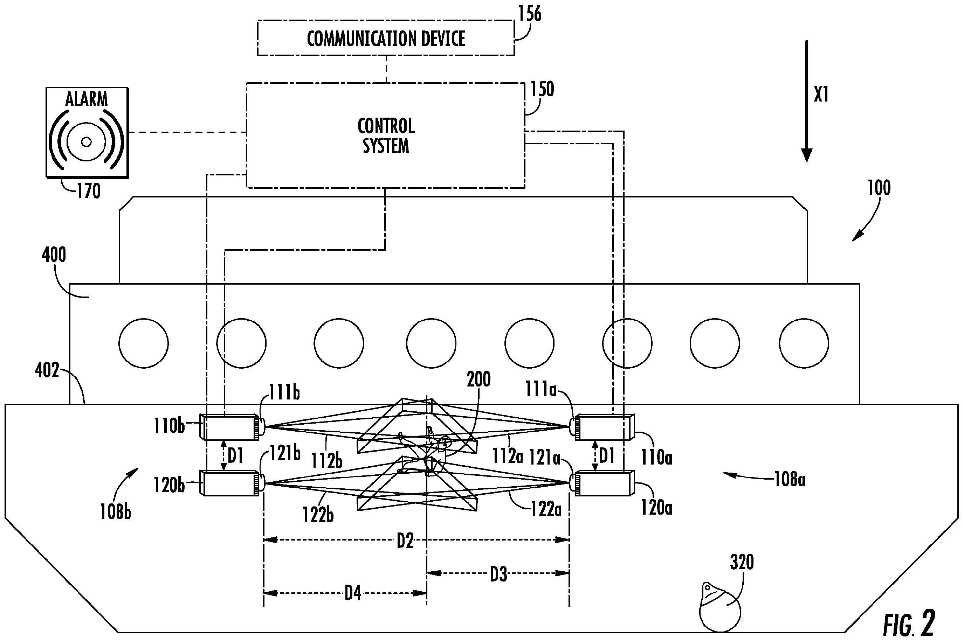

FIGs. 1a-1e shows a schematic view of a line array camera 110 capturing multiple one dimensional data sets 300a of an object 200 to compile a two-dimensional image 300. While FIGs. 1a-1e displays a single line array camera 110, FIGs. 2-4 contains multiple line array cameras with various names includes a first upper line array camera 110a, a second upper line array camera 110b, a first lower line array camera 120a, a second lower line array camera 120b, etc. The nomenclature (first, second, upper, lower) in FIGs. 2-4 is to differentiate between the organization of various line array cameras and each line array camera has the same capabilities as the line array camera 110 discussed in references to FIGs. 1a-1e. The nomenclature first, second, upper, lower is non-limiting and other terms may be used such, as for example, first, second, third, and fourth.

The line array camera 110 may be any camera capable of capturing one-dimensional data sets using a one-dimensional array of pixels 111 such as, for example, a line scan camera, a line array camera, or a one-dimensional array camera. As shown in FIGS 1a-1e, the line array camera 110 has a very narrow field of view due to a first one-dimensional array of pixels 111. As an object 200 moves across a field of view 112 of the line array camera 110, a one-dimensional data set 300a of the object 200 is recorded. Note: the line array camera 110 is continuously capturing data sets even when there is no object 200 moving through the first field of view 112. The one-dimensional data set 300a may be a "slice" of the complete image 300 of the object 200, as seen FIGS 1a-1e. These data sets 300a can then be compiled to create a two-dimensional image 300 of the object 200 that has moved across the field of view 112 of the line array camera 110. Detection of an object 200 within the field of view 112 may be determined in response to at least one of variations within each data set and variations between each data set. When using line array cameras for detection purposes, objects 200 could be moving at different speeds or different directions through the field of view of the line array camera 110. Therefore, a second line array camera can be used in order to calculate the velocity and/or direction of a moving object 200. In the disclosed embodiment, line array cameras are being used to detect an object 200 (specifically a person) falling overboard a ship 400. While the overboard detection system 100 is illustrated in reference to a ship 400, the ship 400 shall not be considered limiting and the overboard detection system 100 may be utilized on other structures where detection of falling objects is desired, such as, for example a bridge or pier.

Advantageously, the one-dimensional array of pixels that produces one-dimensional data sets helps reduce privacy concerns by only imaging slices of an object 200 that moves through the field of view of the line array camera, and does not include the background. In addition, the narrow field of view 112of the line array camera can help reduce nuisance/false alarm risks common in video (2D) systems. In an embodiment, the line array cameras may be short wave infrared (SWIR) cameras. Advantageously, SWIR cameras are beneficial for detection purposes because they do not need visible light and can therefore do discreet detection. In addition, SWIR wavelengths can also penetrate common atmospheric conditions such as haze which would normally obscure the view of a visible camera.

FIG. 2 shows a schematic view of an object overboard detection system 100 for a ship 400, in accordance with an embodiment of the disclosure. With reference to FIG. 2, the object overboard detection system 100 includes a first upper line array camera 110a, a first lower line array camera 120a, a second upper line array camera 110b, a second lower line array camera 120b, and a control system 150. The line array cameras 110a, 110b, 120a, 120b are organized in pairs of line array cameras 108a, 108b.

The first line array camera pair 108a includes a first upper line array camera 110a and a first lower line array camera 120a. The first upper line array camera 110a is located vertically above the first lower line array camera 120a. The first lower line array camera 120a is located at a first distance D1 away from the first upper line array camera 110a. As seen in FIG. 2, the first lower field of view 122a of the first lower line array camera 120a is parallel to the first upper field of view 112a of the first upper camera 110a. The first field of views 112a, 122a may also be parallel to a deck 402 of the ship 400.

The first upper line array camera 110a is configured to capture one or more primary upper data sets within the first upper field of view 112a using a first upper one-dimensional array of pixels 111a. Each primary upper data set is the one-dimensional digital output of what is captured by the first upper one-dimensional array of pixels 111a of the first upper line array camera 110a. The first lower line array camera 120a operates similar to the first upper line array camera 110a. The first lower line array camera 120a is configured to capture one or more primary lower data sets within the first lower field of view 122a. Each primary lower data set is the one-dimensional digital output of what is captured by a first lower one-dimensional array of pixels 121a of the first lower line array camera 120a.

The second line array camera pair 108b includes a second upper line array camera 110b and a second lower line array camera 120b. The second upper line array camera 110b is located vertically above the second lower line array camera 120b. The second lower line array camera 120b is located at a first distance D1 away from the second upper line array camera 110b. As seen in FIG. 2, the second lower field of view 122b of the second lower line array camera 120b is parallel to the second upper field of view 112b of the second upper camera 110b. The second field of views 112b, 122b may also be parallel to a deck 402 of the ship 400.

The second upper line array camera 110b is configured to capture one or more secondary upper data sets within the second upper field of view 112b using a second upper one-dimensional array of pixels 111b. Each secondary upper data set is the one-dimensional digital output of what is captured by the second upper one-dimensional array of pixels 111b of the second upper line array camera 110b. The second lower line array camera 120b operates similar to the second upper line array camera 110b. The second lower line array camera 120b is configured to capture one or more secondary lower data sets within the second lower field of view 122b. Each secondary lower data set is the one-dimensional digital output of what is captured by a second lower one-dimensional array of pixels 121b of the second lower line array camera 120b.

In the illustrated embodiment, the second upper line array camera 110b is facing the first upper line array camera 110a and the second lower line array camera 120b is facing the first lower line array camera 120a. The second pair of line array cameras 108b is located at a second selected distance away from the first pair of line array cameras 108b. Since the pairs of line array cameras 108a, 108b are facing each other, the first upper field of view 112a overlaps with the second upper field of view 112b and the first lower field of view 122a overlaps with the second lower field of view 122b, as seen in FIG. 2. The second field of views 112b, 122b is parallel to first field of views 112a, 122a. Thus an object 200 falling overboard would have to fall through four fields of view 112a, 112b, 122a, 122b.

Only a single line array camera is required to detect the presence of an object 200, however at least two line array cameras are required to detect the trajectory and the velocity of the object 200. Additional line array cameras may be added to increase fidelity. Additional line array cameras facing each other, may also be added to determine that size and location of the object 200.

The direction of the motion of the object 200 can be determined based on which field of view 112a, 112b, 122a, 122b, the object 200 enters first. For example, if the object 200 crosses the upper field of views 112a, 112b at a first point in time and then the lower field of view 122a, 122b at second point in time it may be determined that the object 200 is heading in a first direction X1 and thus falling overboard off the ship 400. Advantageously, knowing the direction in which the object 200 is moving would help differentiate between a person falling over board through the field of views 112a, 112b, 122a, 122b and a bird flying up through the field of views 112a, 112b, 122a, 122b. Using the first selected distance D1 and the time period between when the moving object 200 enters the upper field of view 112a, 112b and the lower field of view 122a, 122b, the velocity of the object 200 can be calculated and used to build up a two-dimensional image (as seen in FIGS. 1a-1e).

Further, the line array cameras can be arranged facing each other such that the first upper field of view 112a overlaps with the second upper field of view 112b and the first lower field of view 122a overlaps with the second lower field of view 122b. Advantageously, having the two line array cameras face each other, could provide additional information about the size of the object 200 and location of the object 200 in reference to the two cameras. Thus, a distance D3 from the first pair of line array cameras 108a to the object may be determined and a distance D4 from the second pair of line array cameras 108b to the object 200 may be determined. In order to determine the location of the object 200 between the two line array cameras 110a, 120a facing each other, the two data sets from each line array camera 110a, 120a are compared to each other. Specifically, the number of pixels that the object 200 takes up within each data set (aka pixels on target). For example, if an object takes up 100 pixels on target for the first upper line array camera 110a and 2 pixels on the second line array camera 120a, then the object is closer to the first upper line array camera 110a. The actual location of the object 200 between the line array cameras 110a, 120a can then be calculated in response to the number of pixels in each data set, angular field of view of each line array camera 110a, 120a, and the known distance between each line array camera 110a, 120a. The size of the object 200 may then be determined using the location of the object 200 between the two line array cameras 110a, 120a and the number of "pixels on target". Advantageously, the alarm 170 may only be activated when the size of the object is within a selected size range.

The control system 150 is configured to control the operation of the object overboard detection system 100 and determine whether an object has fallen overboard, what that object 200 might be, and the location where the object 200 fell overboard. The control system 150 is configured to perform the velocity, trajectory, size, and location calculations that were described above. The control system 150 is in communication with each line array camera 110a, 120a, 110b, 120b. The control system 150 may include a processor and an associated memory. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

Once each data set is captured by the line array cameras 1 10a, 120a, 1 10a, 120b, the data sets are processed by the control system 150 to determine if an object 200 passed through any of the four fields of views 112a, 122a, 112b, 122b and if that object 200 was a person. When it has been determined that a person has fallen overboard an alarm 170 may be activated. The alarm 170 may be visual and/or audible. Additionally, a response protocol may be activated when the control system has detected a man over board event. For example, in one embodiment, the response protocol may include at least one of an alarm 170, a notification message to crew, a buoy drop 320, an engine stop or a coast guard call. These response protocols may be initiated automatically or by a member of the crew on the ship 400 once the detection has been made. Additionally, the two-dimensional image compiled by one of the line array cameras 110a, 120a, 110b, 120b may also be transmitted for human verification. The crew could then take action based on the visual image from the camera 310 or the two-dimensional image compiled by one of the line array cameras 110a, 120a, 110b, 120b. If the object 200 is not a person, the crew may deactivate the alarm, however if the object 200 is a person, the crew may initiate a rescue effort to save the person. Alternatively, the control system 150 may be configured, through visual recognition, to determine an identity of the object 200. For instance the alarm 170 may be deactivated if the control system 150 determines that the identity of the object 200 is a bottle but the control system 150 may activate the alarm 170 if the identity of the object 200 is a person. In addition, the time and location information can be sent to crew members in order for them to quickly search through corresponding security footage (from security cameras on board the ship) for further verification of the man overboard event.

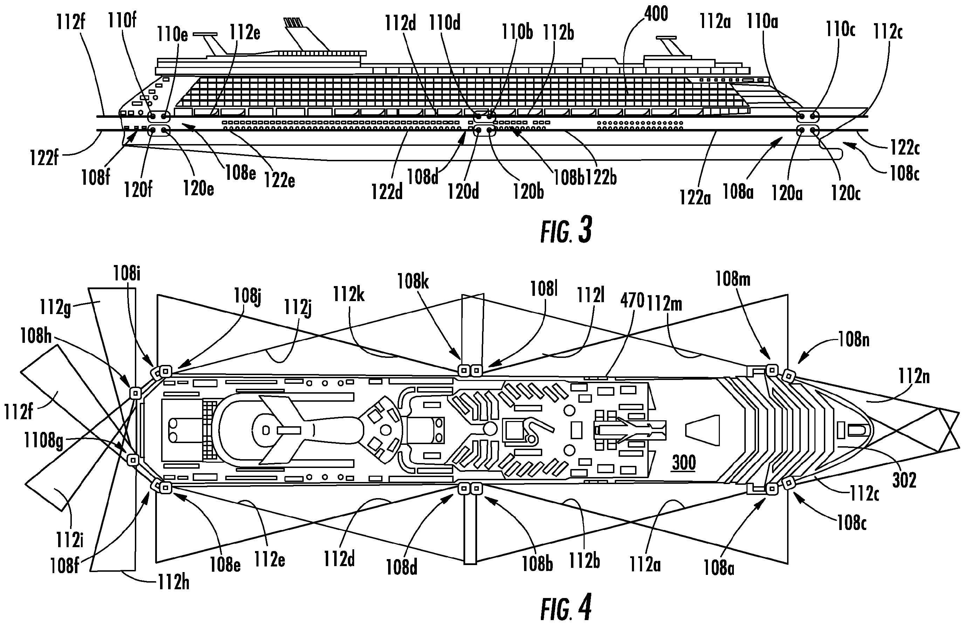

Referring now to FIG. 3 and 4 with continued reference to FIG. 2. FIGs. 3 and 4 show the object overboard detection system 100 incorporated on a ship 400, according to an embodiment of the present disclosure. The configuration shown in FIGs. 3 and 4 is an example of a possible implementation of the overboard detection system 100 on a ship. As seen in FIG. 3 and 4 and mentioned above, the line array cameras are organized in pairs of line array cameras 108a-108n. Each line array camera pair 108a-108n includes an upper line array camera 110 and a lower line array camera 120. FIG. 3 show six pairs of line array cameras 108a-108f and each line array camera pair 108a-108f has the upper line array camera 110a-110f located vertically above the lower line array camera 120a-110f and the same is true for the remaining pairs of line array cameras 108-108n not pictured. The pairs of line array cameras 108a-108n are arranged systematically around the ship 400 so that that the full perimeter 470 of the ship 400 is within an upper field of view 112a-112n, as seen in FIG. 3. Thus, if an object 200 were to fall off the ship 400, it would have to pass through an upper field of view 112a-112n and subsequently the respective lower field of view (not pictured in FIG. 3 but directly below the upper field of view 112a-112n). As seen in FIG. 2, the upper field of view 112a-112f is arranged parallel to the lower field of view 122a-122f and the same is true for the remaining field of views not pictured in FIG. 2. As may be appreciated by one of skill in the art, the disclosure is not limited by the number or arrangement of pairs or single units of line array cameras 108a-108n, which may vary depending on the size and the shape of the ship 400. The arrangement of the cameras may need to be designed differently for each ship and may also depend on the quality of each line array cameras. For example, line array cameras with lower pixel counts may require more to be placed around a ship. Additional line array cameras may be required if there are protrusion from the ship 400. Fewer line array cameras may be needed in an area where it is impossible to fall off the ship 400 (i.e. no balconies, windows, there is no upper deck, inaccessible areas of the ship to passengers and/or crew).

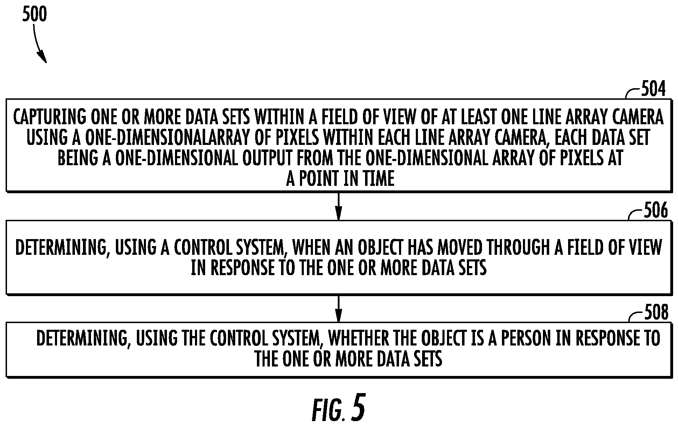

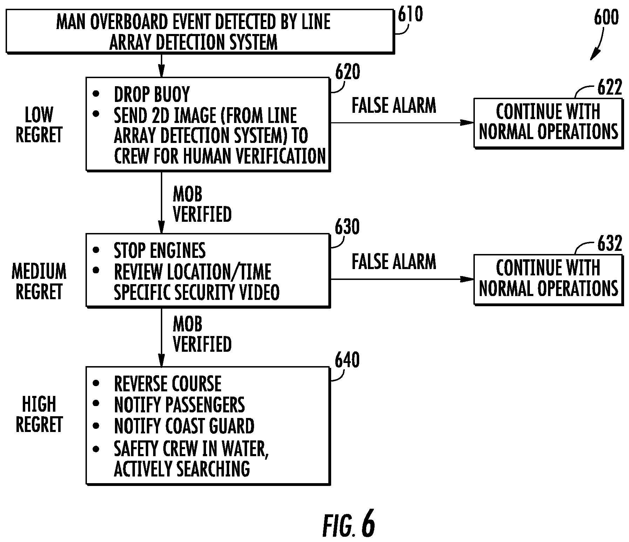

Referring now to FIG. 5, while referencing components of FIGs. 1-3. FIG. 6 shows a flow chart of a method 500 of detecting an object 200 falling overboard, in accordance with an embodiment of the disclosure. At block 504, at least one line array camera 110a, 110b, 120a, 120b captures one or more data sets within a field of view 112a, 112b, 122a, 122b of the line array camera 110a, 110b, 120a, 120b using a one-dimensional array of pixels 111a, 111b, 121a, 121b within each line array camera 110a, 110b, 120a, 120b. Each data set is a one-dimensional output from the one-dimensional array of pixels at a point in time. At block 506, a control system 150 determines when an object 200 has moved through a field of view in response to the one or more data sets. At block 508, the control system 150 determines, whether the object 200 is a person in response to the one or more data sets. The detection system 100 is constantly capturing data sets from all of the line array cameras 110a, 110b, 120a, 120b and analyzing the data sets to determine when an object 200 has moved into any of the fields of view 112a, 112b, 122a, 122b (it does this by comparing the pixels within the same data set as well as comparing different data sets from the same camera). Once the detection system 100 has determined that an object 200 has moved into the field of view of one or more of the cameras, it can analyze the data sets from other cameras to get further information about whether or not the object 200 is a falling person or not.

Advantageously, utilizing multiple line array cameras allow for multiple layers of detection for falling objects and verification, thus increasing redundancy and reducing false alarm rates. Also advantageously, the line array cameras are small and may not protrude more than 600 mm from the side of the ship or other structure. Further advantageously, the line array cameras, as described above, will be able to provide images of the object within seconds after detection for human verification. Also advantageously, SWIR cameras are beneficial for detection purposes because they do not need visible light and can therefore do discreet detection. In addition, SWIR wavelengths can also penetrate common atmospheric conditions such as haze which would normally obscure the view of a visible camera. Active illumination may also be implemented.

While the above description has described the flow process of FIG. 5 in a particular order, it should be appreciated that unless otherwise specifically required in the attached claims that the ordering of the steps may be varied.

Referring now to FIG. 6, while referencing components of FIGs. 1-3. FIG. 6 shows a flow chart of a method 600 of response protocol after detecting an object 200 falling overboard, in accordance with an embodiment of the disclosure. At block 610, an object 200 is detected by the line array detection system 100. Following block 610, there are a series of multiple responses when the line array detection system 100 determines that the object 200 falling overboard is a person. First, a low regret response may be initiated in block 620. In a low regret response at block 620, a buoy 320 may be dropped and/or a two-dimensional image of the object 200 sent for human verification. If the low regret scenario at block 620 turns out to be a false alarm then the ship 400 may return to normal operation at block 622. In a medium regret response at block 630, the engines of the ship 400 may be stopped and/or security video may be reviewed near where the obj ect 200 was detected falling off the ship 400. If the medium regret response at block 630 turns out to be a false alarm then the ship 400 may return to normal operations. In a high regret scenario at block 540, then the ship course may be reversed, passengers notified, coast guard notified and a safety crew may be sent into the water.

While the above description has described the flow process of FIG. 6 in a particular order, it should be appreciated that unless otherwise specifically required in the attached claims that the ordering of the steps may be varied.

As described above, embodiments can be in the form of processor-implemented processes and devices for practicing those processes, such as processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A man-overboard detection system (100), the system comprising:
a first line array camera (110a), and a second line array camera (120a) located at a first selected distance (D1) below the first line array camera, the first and second line array cameras being configured to capture a plurality of data sets within a field of view (112a, 122a) of the line array camera using a one-dimensional array of pixels within each line array camera, each data set being a one-dimensional output from the one-dimensional array of pixels at a point in time; and
a control system (150) configured to determine when an object (200) has moved through a field of view based on one or more data sets and determine whether the object is a person based on a plurality of data sets;
wherein the control system is configured to:
determine that an object has moved through a field of view based on at least one of variations within each data set and variations between each data set;
determine the velocity of the object (200) based on one or more data sets captured by the first line array camera (110a), one or more data sets captured by the second line array camera (120a), and the first selected distance (D1);
compile a two-dimensional image based on the velocity of the object and a plurality of data sets from at least one of the data sets captured by the first line array camera and the data sets captured by the second line array camera; and
analyze the two-dimensional image to determine whether the object (200) is a person or not.

2. The man-overboard detection system (100) of claim 1, wherein:
the control system (150) is configured to activate a response protocol when a person is detected.

3. The man-overboard detection system (100) of claim 2, wherein:
the object detection system is located on a ship (400) and the response protocol includes at least one of an alarm (170), a notification message to crew, a buoy drop (320), an engine stop or a coast guard call.

4. The man-overboard detection system (100) of claim 1, further comprising:
a third line array camera (1 10b) located at a second selected distance (D2) away from the first line array camera (110a), the third line array camera (1 10b) facing the first line array camera in such a way that a field of view (112b) of the third camera overlaps the field of view (112a) of the first camera (110a);
wherein the control system (150) is configured to determine at least one of a size and a location of the object (200) based on the second selected distance and at least one of the one more or more data sets captured by the first line array camera, and the one or more data sets captured by the third line array camera.

5. The man-overboard detection system (100) of claim 4, wherein:
the control system (150) is configured to determine that the object (200) is not a human being based on the size of the object.

6. The man-overboard detection system (100) of claim 5, wherein:
at least one of the time and location of the object (200) is transmitted for human verification of the object.

7. The man-overboard detection system (100) of claim 1, wherein:
the first line array camera (110a) is a short wave infrared camera.

8. The man-overboard detection system (100) of claim 7, wherein:
the first line array camera (110a) utilizes active illumination.

9. A method of man-overboard detection, the method comprising:
capturing a plurality of data sets within a field of view (112a, 122a) of a first line array camera (110a) and a second line array camera (120a) located at a first selected distance (D1) below the first line array camera using a one-dimensional array of pixels within each line array camera, each data set being a one-dimensional output from the one-dimensional array of pixels at a point in time;
determining, using a control system (150), when an object (200) has moved through a field of view based on one or more data sets;
determining whether the object is a person based on a plurality of data sets;
wherein the control system is configured to:
determine that an object has moved through a field of view based on at least one of variations within each data set and variations between each data set; and determine the velocity of the object (200) based on one more or more data sets captured by the first line array camera (110a), thr one or more data sets captured by the second line array camera (120a), and the first selected distance;
compiling, using the control system (150), a two-dimensional image based on the velocity of the object and a plurality of data sets from at least one of the data sets captured by the first line array camera and the data sets captured by the second line array camera; and
analyzing, using the control system, the two-dimensional image to determine whether the object is a person or not.

10. The method of claim 9, further comprising:
activating, using the control system (150), a response protocol when a person is detected.

## Patentansprüche

1. Mann-über-Bord-Detektionssystem (100), wobei das System umfasst:
eine erste Line-Array-Kamera (110a) und eine zweite Line-Array-Kamera (120a), die sich in einem ersten ausgewählten Abstand (D1) unterhalb der ersten Line-Array-Kamera befindet, wobei die erste und die zweite Line-Array-Kamera dazu konfiguriert sind, eine Vielzahl von Datensätzen innerhalb eines Sichtfelds (112a, 122a) der Line-Array-Kamera unter Verwendung eines eindimensionalen Pixelarrays innerhalb jeder Line-Array-Kamera zu erfassen, wobei jeder Datensatz eine eindimensionale Ausgabe von dem eindimensionalen Pixelarray zu einem Zeitpunkt ist; und ein Steuersystem (150), das dazu konfiguriert ist, basierend auf einem oder mehreren Datensätzen zu bestimmen, wann sich ein Objekt (200) durch ein Sichtfeld bewegt hat, und basierend auf einer Vielzahl von Datensätzen zu bestimmen, ob das Objekt eine Person ist;
wobei das Steuersystem zu Folgendem konfiguriert ist:
Bestimmen, basierend auf mindestens einer der Variationen innerhalb jedes Datensatzes und Variationen zwischen jedem Datensatz, dass sich ein Objekt durch ein Sichtfeld bewegt hat; Bestimmen der Geschwindigkeit des Objekts (200) basierend auf einem oder mehreren Datensätzen, die durch die erste Line-Array-Kamera (110a) erfasst werden, einem oder mehreren Datensätzen, die durch die zweite Line-Array-Kamera (120a) erfasst werden, und dem ersten ausgewählten Abstand (D1);
Kompilieren eines zweidimensionalen Bildes basierend auf der Geschwindigkeit des Objekts und einer Vielzahl von Datensätzen aus mindestens einem von den Datensätzen, die durch die erste Line-Array-Kamera erfasst werden, und den Datensätzen, die durch die zweite Line-Array-Kamera erfasst werden; und
Analysieren des zweidimensionales Bildes, um zu bestimmen, ob das Objekt (200) eine Person ist oder nicht.

2. Mann-über-Bord-Detektionssystem (100) nach Anspruch 1, wobei:
das Steuersystem (150) dazu konfiguriert ist, ein Antwortprotokoll zu aktivieren, wenn eine Person detektiert wird.

3. Mann-über-Bord-Detektionssystem (100) nach Anspruch 2, wobei:
das Objektdetektionssystem sich auf einem Schiff (400) befindet und das Antwortprotokoll mindestens eines von einem Alarm (170), einer Benachrichtigung an die Besatzung, einem Bojenabwurf (320), einem Maschinenstopp oder einem Anruf der Küstenwache beinhaltet.

4. Mann-über-Bord-Detektionssystem (100) nach Anspruch 1, ferner umfassend:
eine dritte Line-Array-Kamera (110b), die sich in einem zweiten ausgewählten Abstand (D2) von der ersten Line-Array-Kamera (110a) befindet, wobei die dritte Line-Array-Kamera (110b) der ersten Line-Array-Kamera derart zugewandt ist, dass ein Sichtfeld (112b) der dritten Kamera das Sichtfeld (112a) der ersten Kamera (110a) überlappt;
wobei das Steuersystem (150) dazu konfiguriert ist, mindestens eines von einer Größe und einer Position des Objekts (200) basierend auf dem zweiten ausgewählten Abstand und mindestens einem von dem einen oder den mehreren Datensätzen, die durch die erste Line-Array-Kamera erfasst werden, und dem einen oder den mehreren Datensätzen, die durch die dritte Line-Array-Kamera erfasst werden, zu bestimmen.

5. Mann-über-Bord-Detektionssystem (100) nach Anspruch 4, wobei:
das Steuersystem (150) dazu konfiguriert ist, basierend auf der Größe des Objekts zu bestimmen, dass das Objekt (200) kein Mensch ist.

6. Mann-über-Bord-Detektionssystem (100) nach Anspruch 5, wobei:
mindestens eines von der Zeit und dem Standort des Objekts (200) zur menschlichen Überprüfung des Objekts übermittelt wird.

7. Mann-über-Bord-Detektionssystem (100) nach Anspruch 1, wobei:
die erste Line-Array-Kamera (110a) eine kurzwellige Infrarotkamera ist.

8. Mann-über-Bord-Detektionssystem (100) nach Anspruch 7, wobei:
die erste Line-Array-Kamera (110a) aktive Beleuchtung verwendet.

9. Verfahren zur Mann-über-Bord-Detektion, wobei das Verfahren Folgendes umfasst:
Erfassen einer Vielzahl von Datensätzen innerhalb eines Sichtfelds (112a, 122a) einer ersten Line-Array-Kamera (110a) und einer zweiten Line-Array-Kamera (120a), die sich in einem ersten ausgewählten Abstand (D1) unterhalb der ersten Line-Array-Kamera befindet, unter Verwendung eines eindimensionalen Pixelarrays innerhalb jeder Line-Array-Kamera, wobei jeder Datensatz eine eindimensionale Ausgabe von dem eindimensionalen Pixelarray zu einem Zeitpunkt ist;
Bestimmen, unter Verwendung eines Steuersystems (150), wann sich ein Objekt (200) durch ein Sichtfeld bewegt hat, basierend auf einem oder mehreren Datensätzen;
Bestimmen, ob das Objekt eine Person ist, basierend auf einer Vielzahl von Datensätzen;
wobei das Steuersystem zu Folgendem konfiguriert ist:
Bestimmen, dass sich ein Objekt durch ein Sichtfeld bewegt hat, basierend auf Variationen innerhalb jedes Datensatzes und/oder Variationen zwischen jedem Datensatz; und Bestimmen der Geschwindigkeit des Objekts (200) basierend auf einem oder mehreren Datensätzen, die durch die erste Line-Array-Kamera (110a) erfasst werden, einem oder mehreren Datensätzen, die durch die zweite Line-Array-Kamera (120a) erfasst werden, und dem ersten ausgewählten Abstand;
Kompilieren eines zweidimensionalen Bildes unter Verwendung des Steuersystems (150) basierend auf der Geschwindigkeit des Objekts und einer Vielzahl von Datensätzen aus mindestens einem von den Datensätzen, die durch die erste Line-Array-Kamera erfasst werden, und den Datensätzen, die durch die zweite Line-Array-Kamera erfasst werden; und
Analysieren des zweidimensionalen Bildes unter Verwendung des Steuersystems, um zu bestimmen, ob das Objekt eine Person ist oder nicht.

10. Verfahren nach Anspruch 9, ferner umfassend:
Aktivieren, unter Verwendung des Steuersystems (150), eines Antwortprotokolls, wenn eine Person detektiert wird.

## Revendications

1. Système de détection d'homme à la mer (100), le système comprenant :
une première caméra matricielle linéaire (110a), et une deuxième caméra matricielle linéaire (120a) située à une première distance sélectionnée (D1) sous la première caméra matricielle linéaire, les première et deuxième caméras matricielles linéaire étant configurées pour capturer une pluralité d'ensembles de données dans un champ de vision (112a, 122a) de la caméra matricielle linéaire à l'aide d'un réseau unidimensionnel de pixels à l'intérieur de chaque caméra matricielle linéaire, chaque ensemble de données étant une sortie unidimensionnelle du réseau unidimensionnel de pixels à un point dans le temps ; et
un système de commande (150) configuré pour déterminer lorsqu'un objet (200) s'est déplacé dans un champ de vision sur la base d'un ou de plusieurs ensembles de données et déterminer si l'objet est une personne sur la base d'une pluralité d'ensembles de données ;
dans lequel le système de commande est configuré pour :
déterminer qu'un objet s'est déplacé à travers un champ de vision sur la base d'au moins l'une des variations à l'intérieur de chaque ensemble de données et des variations entre chaque ensemble de données ;
déterminer la vitesse de l'objet (200) sur la base d'un ou de plusieurs ensembles de données capturés par la première caméra matricielle linéaire (110a), d'un ou de plusieurs ensembles de données capturés par la deuxième caméra matricielle linéaire (120a) et de la première distance sélectionnée (D1) ;
compiler une image bidimensionnelle sur la base de la vitesse de l'objet et d'une pluralité d'ensembles de données à partir d'au moins l'un des ensembles de données capturés par la première caméra matricielle linéaire et des ensembles de données capturés par la deuxième caméra matricielle linéaire ; et
analyser l'image bidimensionnelle pour déterminer si l'objet (200) est une personne ou non.

2. Système de détection d'homme à la mer (100) selon la revendication 1, dans lequel :
le système de commande (150) est configuré pour activer un protocole de réponse lorsqu'une personne est détectée.

3. Système de détection d'homme à la mer (100) selon la revendication 2, dans lequel :
le système de détection d'objet est situé sur un navire (400) et le protocole de réponse comporte au moins l'un d'une alarme (170), d'un message de notification à l'équipage, d'un largage de bouée (320), d'un arrêt de moteur ou d'un appel de garde-côtes.

4. Système de détection d'homme à la mer (100) selon la revendication 1, comprenant en outre :
une troisième caméra matricielle linéaire (110b) située à une seconde distance sélectionnée (D2) de la première caméra matricielle linéaire (110a), la troisième caméra matricielle linéaire (110b) faisant face à la première caméra matricielle linéaire de sorte qu'un champ de vision (112b) de la troisième caméra chevauche le champ de vision (112a) de la première caméra (110a) ;
dans lequel le système de commande (150) est configuré pour déterminer au moins l'un d'une taille et d'un emplacement de l'objet (200) sur la base de la seconde distance sélectionnée et au moins l'un des un ou plusieurs ensembles de données capturés par la première caméra matricielle linéaire, et des un ou plusieurs ensembles de données capturés par la troisième caméra matricielle linéaire.

5. Système de détection d'homme à la mer (100) selon la revendication 4, dans lequel :
le système de commande (150) est configuré pour déterminer que l'objet (200) n'est pas un être humain sur la base de la taille de l'objet.

6. Système de détection d'homme à la mer (100) selon la revendication 5, dans lequel :
au moins l'un de l'heure et de l'emplacement de l'objet (200) est transmis pour une vérification humaine de l'objet.

7. Système de détection d'homme à la mer (100) selon la revendication 1, dans lequel :
la première caméra matricielle linéaire (110a) est une caméra infrarouge à ondes courtes.

8. Système de détection d'homme à la mer (100) selon la revendication 7, dans lequel :
la première caméra matricielle linéaire (110a) utilise un éclairage actif.

9. Procédé de détection d'homme à la mer, le procédé comprenant :
la capture d'une pluralité d'ensembles de données dans un champ de vision (112a, 122a) d'une première caméra matricielle linéaire (110a) et d'une deuxième caméra matricielle linéaire (120a) située à une première distance sélectionnée (D1) sous la première caméra matricielle linéaire à l'aide d'un réseau unidimensionnel de pixels à l'intérieur de chaque caméra matricielle linéaire, chaque ensemble de données étant une sortie unidimensionnelle du réseau unidimensionnel de pixels à un point dans le temps ;
le fait de déterminer, à l'aide d'un système de commande (150), lorsqu'un objet (200) s'est déplacé à travers un champ de vision sur la base d'un ou de plusieurs ensembles de données ;
le fait de déterminer si l'objet est une personne à partir d'une pluralité d'ensembles de données ;
dans lequel le système de commande est configuré pour :
déterminer qu'un objet s'est déplacé à travers un champ de vision sur la base d'au moins l'une des variations à l'intérieur de chaque ensemble de données et des variations entre chaque ensemble de données ; et déterminer la vitesse de l'objet (200) sur la base d'un ou de plusieurs ensembles de données capturés par la première caméra matricielle linéaire (110a), d'un ou de plusieurs ensembles de données capturés par la deuxième caméra matricielle linéaire (120a) et de la première distance sélectionnée ;
la compilation, à l'aide du système de commande (150), d'une image bidimensionnelle sur la base de la vitesse de l'objet et d'une pluralité d'ensembles de données à partir d'au moins l'un des ensembles de données capturés par la première caméra matricielle linéaire et des ensembles de données capturés par la deuxième caméra matricielle linéaire ; et
l'analyse, à l'aide du système de commande, de l'image bidimensionnelle pour déterminer si l'objet est une personne ou non.

10. Procédé selon la revendication 9, comprenant en outre :
l'activation, à l'aide du système de commande (150), d'un protocole de réponse lorsqu'une personne est détectée.
